# EUROPÄISCHE PATENTSCHRIFT

(11) **EP 0 517 027 B1**
(45) Veröffentlichungstag und Bekanntmachung des Hinweises auf die Patenterteilung: **16.08.1995**
(21) Anmeldenummer: 92108396.0
(22) Anmeldetag: 19.05.1992
(51) Int. Cl.: B29C 39/18, E06B 3/26

(54) **Verfahren und Vorrichtung zum Herstellen von Verbundprofilen aus mindestens zwei Einzelprofilen**
Process and device for producing composite profiles from at least two single profiles
Procédé et dispositif pour la fabrication de profilés composites à partir d'au moins deux profilés simples

(30) Priorität: 01.06.1991 DE 4118049; 23.03.1992 DE 4209345
(43) Veröffentlichungstag der Anmeldung: 09.12.1992
(73) Patentinhaber: BAYER AG, 51368 Leverkusen (DE)
(72) Erfinder: Vente, Paul, W-5090 Leverkusen (DE); Pesch, Heinrich, Dipl.-Ing., W-4047 Dormagen 11 (DE); Post, Udo, W-5060 Bergisch Gladbach 2 (DE); Knipp, Ulrich, Dr., W-5060 Bergisch Gladbach 2 (DE)

(56) Entgegenhaltungen:
- EP-A- 0 110 340
- DE-A- 2 305 873
- DE-A- 3 209 599
- FR-A- 1 432 223
- GB-A- 1 520 190

## Beschreibung

Die Erfindung betrifft ein Verfahren und eine Vorrichtung zum Herstellen von Verbundprofilen aus mindestens zwei Einzelprofilen mit mindestens einem verbindenden Isoliersteg, insbesondere für Türen und Fenster, wobei mindestens zwei Einzelprofile mit Abstand zueinander mittels Führungen parallel geführt werden, zwischen die Einzelprofile mindestens eine Abdichtung eingeführt wird, und darauf ein zum Isoliersteg aushärtender Kunststoff in flüssiger Form aufgegeben wird, wie aus DE-A-38 22 083 bekannt.

Mit den bisher bekannten Verfahren und Vorrichtungen lassen sich nur Verbundprofile des gleichen Typs mit gleichen Querschnittsabmessungen herstellen. Das heißt, es muß jeweils eine besonders angepaßte Vorrichtung benutzt werden. Bei Maßabweichungen der angelieferten Einzelprofile, wie es hin und wieder vorkommt, lassen sich die Vorrichtungen nicht anpassen und solche Maßabweichungen können sich im fertigen Verbundprofil insbesondere dann nachteilig bemerkbar machen, wenn sich die Maßabweichungen der beiden Einzelprofile addieren. Aus solchen Verbundprofilen gefertigte Fensterrahmen können dann undicht schließen. Da auf einer solchen Vorrichtung nur ein und dasselbe Verbundprofil herstellbar ist, arbeitet sie unwirtschaftlich, wenn sie nicht ausreichend ausgelastet ist. Es kommt aber häufig vor, daß besonders gestaltete Verbundprofile in kleinen Stückzahlen hergestellt werden müssen.

Aufgabe der Erfindung ist es, die obengenannten Nachteile zu beseitigen.

Diese Aufgabe wird durch das Verfahren nach Anspruch 1 bzw. die Vorrichtung nach Anspruch 8 gelöst. Indem jedes der Einzelprofile gesondert mit quer und vertikal zur Führungsrichtung verstellbaren Führungen in Form von Führungsrollen geführt wird, jede dieser Führungsrollen mindestens zwei einen Winkel miteinander einschließende Führungsflächen aufweist, jede dieser Führungsrollen die ihnen zugeordneten Einzelprofile mit einer ihrer Führungsflächen von oben bzw. von unten und mit der anderen Führungsfläche von der einen Seite führen, und jedes Einzelprofil auf der anderen Seite mit einer zusätzlichen, zumindest quer zur Führungsrichtung verstellbaren Führung in Form einer weiteren Führungsfläche abgestützt wird, wird erreicht, daß man Verbundprofile der verschiedensten Querschnitte und Größen fertigen kann und insbesondere bei Maßabweichungen der Einzelprofile durch Nachstellen der Führungen bzw. Führungsrollen dahingehend einwirken kann, daß die wichtigen Hauptabmessungen des herzustellenden Verbundprofils eingehalten werden, indem beispielsweise der Isoliersteg entsprechend breiter oder schmäler gemacht wird. Bei Anwendung des neuen Verfahrens lassen sich die zur Durchführung erforderlichen Vorrichtungen besser ausnutzen. Ein besonderer Vorteil des neuen Verfahrens liegt darin, daß auch Verbundprofile mit sehr schmalem Isoliersteg herstellbar sind. Die Einzelprofile bestehen vornehmlich aus Aluminium, Stahl oder Kunststoff, wobei die gepaarten Einzelprofile unterschiedlich lackiert oder in anderer Weise unterschiedlich oberflächenbehandelt sein können.

Gemäß einer besonderen Ausführungsform wird als weitere Führungsfläche eine Stützführung verwendet.

Alternativ wird jedes Einzelprofil von Führungsrollen geführt, von denen mindestens einige eine Führungsnut aufweisen, die durch drei Führungsflächen begrenzt ist, wobei die Breite der Führungsnut dem zu führenden Einzelprofil durch Verstellen eines der seitlichen Führungsflächen angepaßt wird.

Es versteht sich, daß auch Einzelprofile aus unterschiedlichen Werkstoffen gepaart werden können, wobei allerdings darauf zu achten ist, daß nicht durch unterschiedliche Wärmedehnungen Probleme auftreten.

In der Regel werden die Profile hochkant geführt, so daß der zwischen den Einzelprofilen und der Abdichtung gebildete Kanal oben offen ist, sofern keine zusätzliche Abdeckung vorgesehen ist. Auf diese Weise läßt sich die Bildung des Isoliersteges gut beobachten.

Soweit Kunststoff und Einzelprofile verwendet werden, welche beim Abkühlen einem Schwund unterliegen, ist das neue Verfahren besonders vorteilhaft, denn die Führungen erlauben ein exaktes Anpassen der Führungsstrecke an den Schwund.

Als Abdichtung läßt sich ein Folienstreifen, beispielsweise aus Papier, Kunststoff, Metall, verwenden. Seine Breite muß jedoch dem Abstand der Einzelprofile angepaßt sein. Die Einzelprofile weisen in aller Regel innenseitig Rippen auf, auf welche der Folienstreifen aufgelegt wird. Häufig sind auch Nuten vorgesehen, in welche der Folienstreifen einschiebbar ist. Es lassen sich auch mehrere Folienstreifen übereinander einführen, um beispielsweise den Isoliersteg oben abzudecken oder mehrere Isolierstege vorzusehen, indem auf jeden Folienstreifen ein Kunststoff in flüssigem Zustand aufgegossen wird.

Schließlich ist es auch möglich, in den von den Einzelprofilen und dem Folienstreifen gebildeten Kanal Füllprofile einlaufen zu lassen, beispielsweise aus Holz oder Hohlprofile aus Kunststoff, Schaumstoffprofile oder dergleichen, welche in den flüssigen Kunststoff eingebettet werden. Dabei weisen solche Füllprofile vorzugsweise Distanzstücke oder Noppen auf, um sie positioniert auf Abstand zu dem Folienstreifen und den Innenseiten der Einzelprofile zu halten, so daß sie von dem flüssigen Kunststoff ummantelt werden können. In den von den Einzelprofilen und dem Folienstreifen gebildeten Kanal laßt sich auch Kunststoffgranulat, insbesondere Schaumstoffgranulat, vorzugsweise Recyclingmaterial, einschütten und mit flüssigem Kunststoff übergießen, so daß die Hohlräume ausgefüllt werden. In den Kunststoff für den Isoliersteg lassen sich auch Füllstoffe, wie Schwermetall, Kreide, usw. eingeben. Zur Erzeugung von Verstärkungseffekten ist es vorteilhaft, auch fasrige Stoffe, z.B. Glasfaser, Glasflakes usw., einzubringen. Allerdings sollte bei der Wahl der Materialien darauf geachtet werden, daß sie möglichst geringe Wärmeleitfähigkeit besitzen oder daß der Mengenanteil möglichst gering gehalten wird.

Die Führungen lassen sich von Hand verstellen.

Eine besondere Ausführungsform ist darin zu sehen, daß die Führungen über ein Steuergerät und Stellantriebe durch eine Programmvorgabe automatisch verstellt werden.

Diese aufwendige Ausgestaltung ist insbesondere dann von Vorteil, wenn häufig unterschiedliche Verbundprofile in kleinen Mengen hergestellt werden müssen.

Es kann auch von Vorteil sein, die Einzelprofile beim Einlaufen durch einen austauschbaren Torpedo auf Distanz zu führen.

Zur Herabsetzung der Reibung können die Gleitflächen des Torpedos durch Luft- oder sonstige Gleitmittelzufuhr geschmiert werden, wobei diese Stoffe vorzugsweise durch Bohrungen im Torpedo zugeführt werden.

Die neue Vorrichtung zum Herstellen von Verbundprofilen aus mindestens zwei Einzelprofilen mit mindestens einem verbindenden Isoliersteg, insbesondere für Türen und Fenster, geht aus von einer durch Führungen gebildeten Fertigungsstraße für zwei mit Abstand parallel zueinander zu führenden Einzelprofilen, einer Vorrichtung zum Einbringen einer Abdichtung zwischen die Einzelprofile sowie einer in den von den Einzelprofilen und der Abdichtung begrenzten Kanal einmündenden Aufgabevorrichtung für einen Kunststoff im flüssigen Zustand.

Das Neue ist darin zu sehen, daß diese Führungen quer und vertikal zur Transportrichtung verstellbar sind und aus für jedes Einzelprofil gesondert unterhalb und oberhalb desselben angeordneten, horizontal und vertikal verstellbaren Führungsrollen bestehen, von denen jede zwei unter einem Winkel zueinander angeordnete Führungsflächen aufweist, wobei eine dieser Führungsflächen von unten bzw. von oben und die andere Führungsfläche an der einen Seite gegen das zugeordnete Einzelprofil anliegen und daß eine weitere Führungsfläche an der anderen Seite anliegt.

Dadurch läßt sich zum einen die Fertigungsstraße - natürlich nur in gewissen Grenzen - jeder Art von Einzelprofilen bzw. von Verbundprofilen anpassen. Insbesondere die Führung der Einzelprofile durch gesonderte Führungsrollen, von denen jede das zugeordnete Einzelprofil in mindestens zwei Ebenen gleichzeitig führt, gewährleistet besondere Sicherheit der exakten Führung. Es lassen sich dank der besonders gestalteten Führungsrollen auch Verbundprofile mit sehr schmalem Isoliersteg herstellen. Die Verstellbarkeit der Führungsrollen läßt sich in einfachster Weise durch Klemmstücke oder durch Gewindespindeln realisieren.

Gemäß einer besonderen Ausführungsform besteht die weitere Führungsfläche aus einer Stützführung, beispielsweise aus umlaufenden seitlichen Bändern oder aus Rollen mit senkrechter Achse.

Alternativ weisen mindestens einige Führungsrollen eine Führungsnut auf, welche durch die zwei unter einem Winkel angeordneten Führungsflächen und die weitere Führungsfläche gebildet ist, wobei eine der seitlichen Führungsflächen zum Einstellen der Breite der Führungsnut verstellbar ist.

Eine besondere Ausführungsform ist darin zu sehen, daß den Führungen Stellantriebe zugeordnet sind, welche über Impulsleitungen mit einem Steuergerät verbunden sind.

Diese aufwendige Ausführungsform lohnt sich nur, wenn häufig unterschiedliche Verbundprofiltypen hergestellt werden müssen, weil sich nur dann durch Einsparung der Umrüstzeiten die Anschaffungskosten amortisieren.

Vorstellbar sind auch hydraulisch arbeitende Verstellvorrichtungen, indem den Führungen von einer Steuereinheit über Proportionalventile zentral anfahrbare Hydraulikantriebe zugeordnet sind.

Vorzugsweise weist die Fertigungsstraße einlaufseitig einen austauschbaren, mit Gleitflächen versehenen Torpedo zum Positionieren der Einzelprofile auf.

Die Anordnung eines Torpedos, gegebenenfalls zusätzlich zu Führungsrollen im gleichen Bereich, bringt den Vorteil, daß gegenüber den Führungsrollen größere Gleitflächen vorhanden sind, welche die Position der Einzelprofile beim Einlaufen schneller stabilisiert. Diese Gleitflächen lassen sich durch einen Luftfilm oder einen flüssigen Gleitmittelfilm, welcher vorzugsweise durch Bohrungen im Torpedo gespeist wird, schmieren.

In der Zeichnung ist die neue Vorrichtung in einem Ausführungsbeispiel rein schematisch dargestellt und nachstehend näher erläutert. Es zeigen:
- Fig. 1: die Vorrichtung in der Seitenansicht,
- Fig. 2: die Vorrichtung in der Draufsicht außerhalb des Beschickungsbereiches,
- Fig. 3: die Vorrichtung im Schnitt gemäß Linie A-B in Fig. 1,
- Fig. 4: einen Schnitt gemäß Linie C-D in Fig. 1 in vergrößertem Maßstab,
- Fig. 5: eine Ausführungsform der Vorrichtung mit automatischer Verstellbarkeit der Führungen und
- Fig. 6: eine besondere Ausführungsform der Führungsrollen in teilweisem Schnitt.

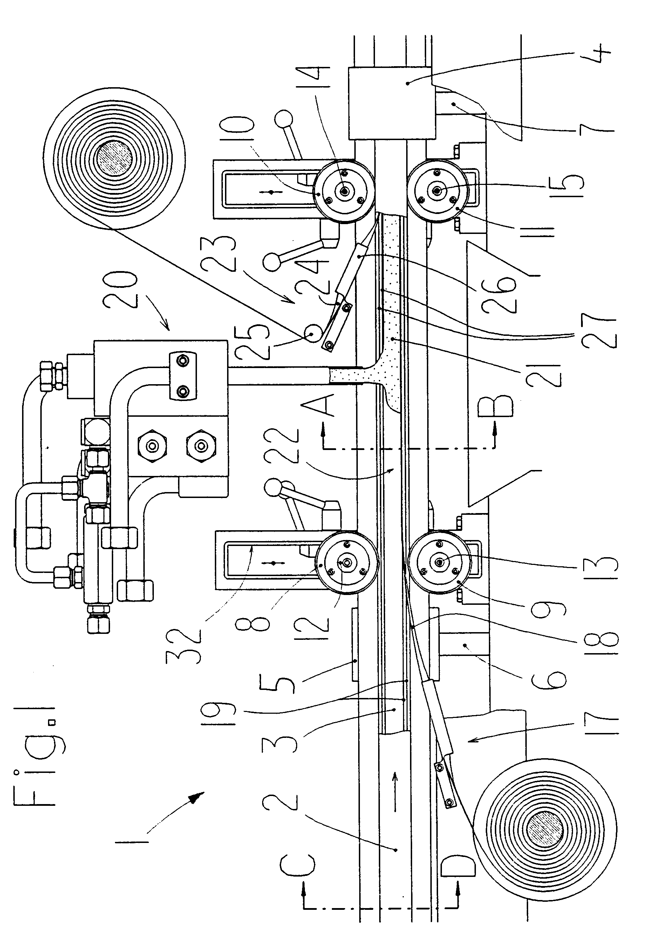

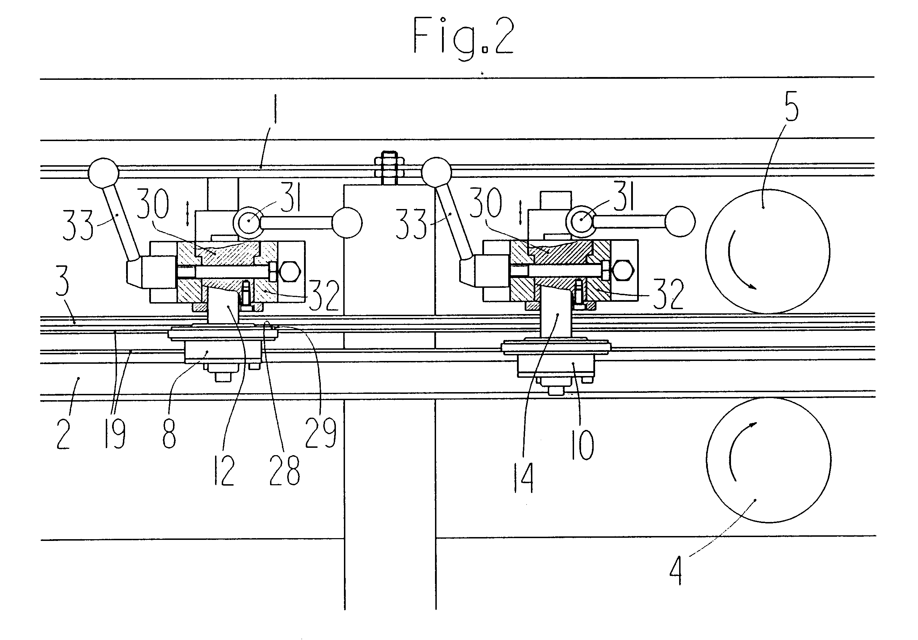

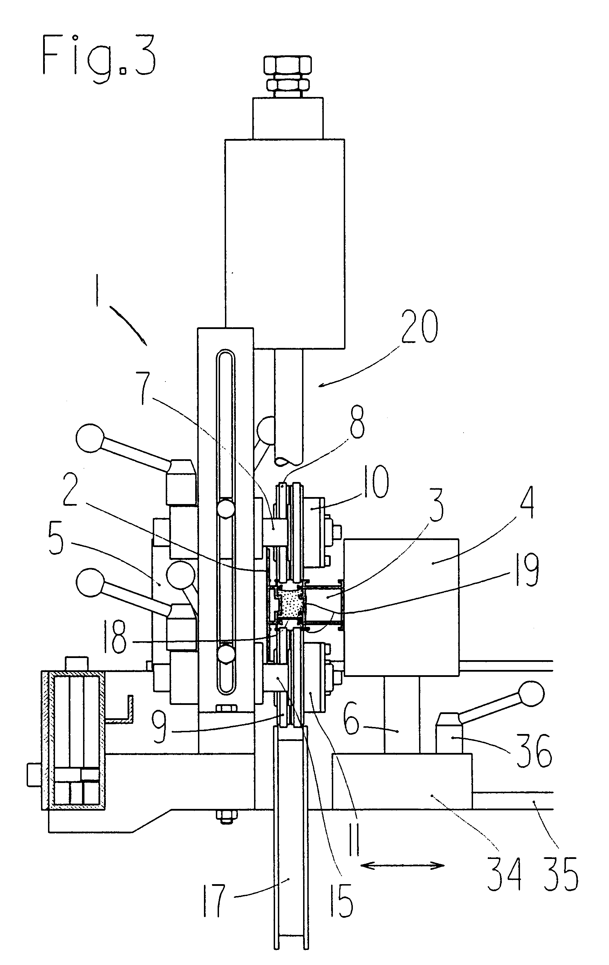

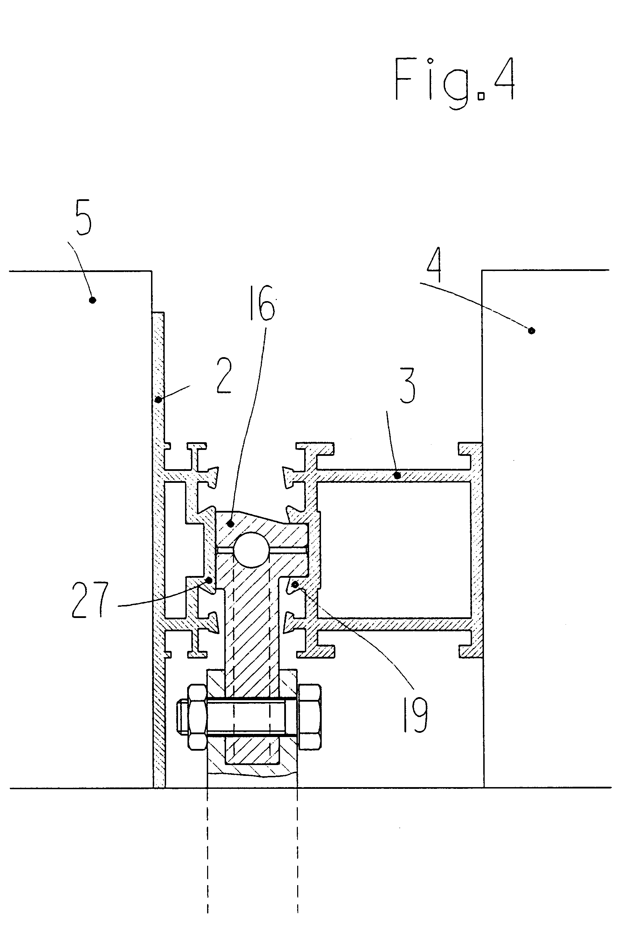

In Fig. 1 bis 4 besteht die Vorrichtung aus einer Führungsstraße 1 für zwei Einzelprofile 2, 3, wobei zwei Stützführungen 4, 5 in Form von Rollen mit vertikaler Achse 6, 7 vorgesehen sind, welche außenseitig gegen die Einzelprofile 2, 3 anliegen, sowie aus Führungsrollen 8, 9, 10, 11, welche oberhalb und unterhalb jedes Einzelprofils 2, 3 entlang der Führungsstraße 1 auf horizontalen Achsen 12, 13, 14, 15 angeordnet sind. Ein zwischen den Einzelprofilen 2, 3 angeordnetes Torpedo 16 sorgt dafür, daß die Einzelprofile 2, 3 beim Einlaufen auf Abstand gehalten werden. Dahinter ist in Fertigungsrichtung eine Einführvorrichtung 17 für eine aus einem Folienstreifen 18 bestehende Abdichtung vorgesehen. Dieser Folienstreifen 18 wird zwischen Rippen 19 der Einzelprofile 2, 3 eingefädelt. Eine Aufgabevorrichtung 20 für einen Kunststoff in flüssiger Form ist oberhalb der Einzelprofile 2, 3 angeordnet und öffnet in den durch die Einzelprofile 2, 3 und den Folienstreifen 18 gebildeten Kanal 22. Schließlich ist hinter der Aufgabevorrichtung 20 oberhalb der Führungsstraße 1 eine weitere Einführvorrichtung 23 für eine zweite Abdichtung in Form eines Folienstreifens 24 vorgesehen. Dieser Folienstreifen 24 läuft über eine Umlenkrolle 25 und ein Führungsblech 26 zwischen Rippen 27 ein. Jede der Führungsrollen 8, 9, 10, 11 besitzt eine radiale Führungsfläche 28 und eine axiale Führungsfläche 29, welche unter einem Winkel von 90° zueinander stehen. Die Achsen 12, 13, 14, 15 der Führungsrollen 8, 9, 10, 11 sind in Klemmstücken 30 gelagert und mit Klemmkloben 31 darin exakt positioniert fixierbar. Die Klemmstücke 30 sind in Gleitstücken 32 angeordnet und darin ebenfalls mittels Klemmkloben 33 fixierbar.

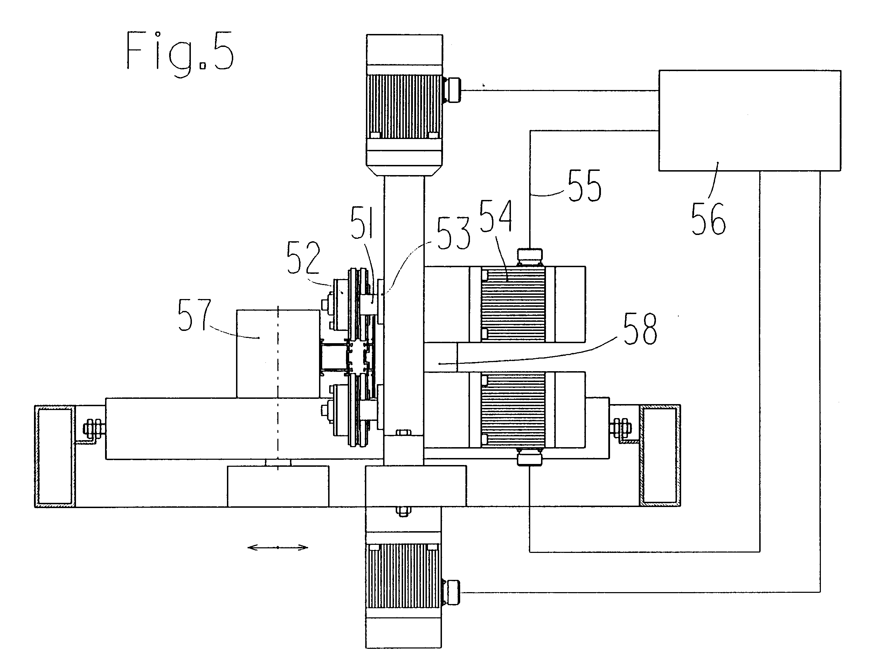

Bei der Ausführungsform gemäß Fig. 5 sind die Achsen 51 der Führungsrollen 52 in Gleitstücken 53 gelagert, wobei die Achsen 51 in Achsrichtung und die Gleitstücke 53 quer zur Achsrichtung mittels nicht dargestellter Spindeln mit elektrischen Schrittmotoren 54 verstellbar sind. Diese Schrittmotoren 54 werden über Impulsleitungen 55 von einer elektronischen Steuereinheit 56 aus gesteuert. In gleicher Weise sind die seitlichen Stützführungen 57, 58 quer verstellbar, was jedoch nicht dargestellt, sondern nur angedeutet ist, damit die Figur nicht zu unübersichtlich wird.

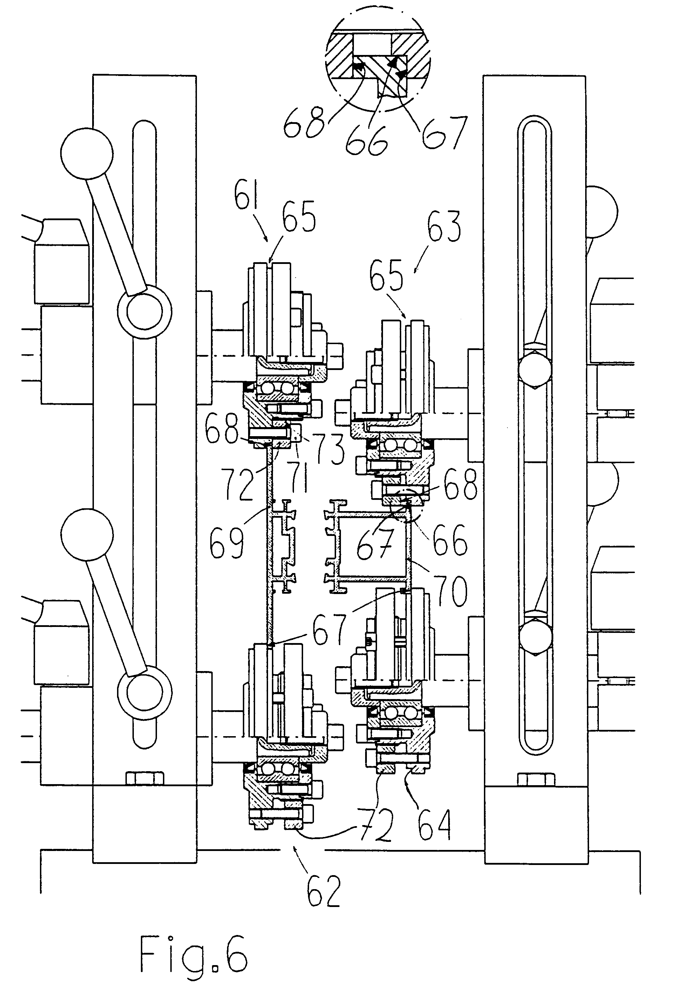

In Fig. 6 weisen die Führungsrollen 61, 62, 63, 64 Führungsnuten 65 auf, deren eine Führungsfläche 66 achsparallel und die beiden anderen Führungsflächen 67, 68 radial angeordnet sind. Dabei liegt die Führungsfläche 66 von oben bzw. von unten gegen die Einzelprofile 69, 70 an, die Führungsflächen 67 seitlich von außen und die Führungsflächen 68 seitlich von innen. Die Führungsfläche 68 ist auf einem mittels Innengewinde 73 verstellbaren Ring 72 angeordnet, so daß sich die Breite der Führungsnut 65 auf das zu führende Einzelprofil 69, 70 einstellen läßt. Mittels Schrauben 71 ist der Ring 72 gegen Verdrehen gesichert. Bei den Führungsrollen 62 und 64 sind die Ringe 72 noch nicht einjustiert.

## Patentansprüche

1. Verfahren zum Herstellen von Verbundprofilen aus mindestens zwei Einzelprofilen mit mindestens einem verbindenden Isoliersteg, insbesondere für Türen und Fenster, wobei:
- mindestens zwei Einzelprofile (2, 3; 69, 70) mit Abstand zueinander mittels Führungen (4, 5, 8, 9, 10, 11; 52, 57, 58; 61, 62, 63, 64) parallel geführt werden;
- zwischen die Einzelprofile (2, 3; 69, 70) mindestens eine Abdichtung (18, 24) eingeführt wird, und darauf ein zum Isoliersteg aushärtender Kunststoff (21) in flüssiger Form aufgegeben wird;
dadurch gekennzeichnet, daß
- jedes der Einzelprofile (2, 3; 69, 70) gesondert mit quer und vertikal zur Führungsrichtung verstellbaren Führungen in Form von Führungsrollen (8, 9, 10, 11; 52; 61, 62, 63, 64) geführt wird;
- jede dieser Führungsrollen mindestens zwei einen Winkel miteinander einschließende Führungsflächen (28, 29; 66, 67) aufweist;
- jede dieser Führungsrollen das ihnen zugeordnete Einzelprofil (2, 3; 69, 70) mit einer ihrer Führungsflächen (29, 66) von oben bzw. von unten und mit der anderen Führungsfläche (28; 67) von der einen Seite führen;
- jedes Einzelprofil (2, 3; 69, 70) auf der anderen Seite mit einer zusätzlichen, zumindest quer zur Führungsrichtung verstellbaren Führung in Form einer weiteren Führungsfläche (4, 5; 57, 58; 68) abgestützt wird.

2. Verfahren nach Anspruch 1, dadurch gekennzeichnet, daß als weitere Führungsfläche eine Stützführung (4, 5) verwendet wird.

3. Verfahren nach Anspruch 1, dadurch gekennzeichnet, daß jedes Einzelprofil (69, 70) von Führungsrollen (61, 62, 63, 64) geführt wird, von denen mindestens einige eine Führungsnut (65) aufweisen, die durch drei Führungsflächen (66, 67, 68) begrenzt ist, wobei die Breite der Führungsnut (65) dem zu führenden Einzelprofil (69, 70) durch Verstellen einer der seitlichen Führungsflächen (68) anpaßbar ist.

4. Verfahren nach Anspruch 1, 2 oder 3, dadurch gekennzeichnet, daß die Führungen (57, 58) und/oder die Führungsrollen (52) über ein Steuergerät (56) und Stellantriebe (54) durch eine Programmvorgabe automatisch verstellt werden.

5. Verfahren nach einem der Ansprüche 1 bis 4, dadurch gekennzeichnet, daß in den von den Einzelprofilen (2, 3) und der Abdichtung (18) gebildeten Kanal (22) Füllprofile eingebracht und in den flüssigen Kunststoff eingebettet werden.

6. Verfahren nach einem der Ansprüche 1 bis 5, dadurch gekennzeichnet, daß in den von den Einzelprofilen (2, 3) und der Abdichtung (18) gebildeten Kanal (22) Kunststoffgranulat eingebracht und in den flüssigen Kunststoff eingebettet wird.

7. Verfahren nach einem der Ansprüche 1 bis 6, dadurch gekennzeichnet, daß die Einzelprofile (2, 3) beim Einlaufen durch einen austauschbaren Torpedo (16) auf Abstand geführt werden.

8. Vorrichtung zum Herstellen von Verbundprofilen aus mindestens zwei Einzelprofilen mit mindestens einem verbindenden Isoliersteg, insbesondere für Türen und Fenster, bestehend aus:
- einer durch Führungen (4, 5, 8, 9, 10, 11; 52, 57, 58; 61, 62, 63, 64) gebildeten Fertigungsstraße (1) für zwei mit Abstand parallel zueinander zu führenden Einzelprofilen (2, 3; 69, 70);
- einer Einführvorrichtung (17, 23) zum Einbringen einer Abdichtung (18, 24) zwischen die Einzelprofile (2, 3; 69, 70); sowie
- einer in den von den Einzelprofilen (2, 3; 69, 70) und der Abdichtung (18, 24) begrenzten Kanal (22) einmündenden Aufgabevorrichtung (20) für einen zum Isoliersteg aushärtenden Kunststoff (21) in flüssigem Zustand;
dadurch gekennzeichnet, daß
- diese Führungen quer und vertikal zur Führungsrichtung verstellbar sind und für jedes Einzelprofil (2, 3; 69, 70) gesondert unterhalb und oberhalb desselben angeordnete, quer und vertikal verstellbare Führungsrollen (8, 9, 10, 11; 52; 61, 62, 63, 64) aufweisen;
- jede dieser Führungsrollen mindestens zwei unter einem Winkel zueinander angeordnete Führungsflächen (28, 29; 69, 70) aufweist;
- eine dieser Führungsflächen (29; 66) von unten bzw. von oben und die andere Führungsfläche (28; 67) von der einen Seite gegen das zugeordnete Einzelprofil (2, 3; 69, 70) anliegt; und daß
- eine zusätzliche, zumindest quer zur Führungsrichtung verstellbare Führung in Form einer weiteren Führungsfläche (4, 5; 57, 58; 68) an der anderen Seite des jeweiligen Einzelprofiles anliegt.

9. Vorrichtung nach Anspruch 8, dadurch gekennzeichnet, daß die weitere Führungsfläche aus einer Stützführung (4, 5) besteht.

10. Vorrichtung nach Anspruch 8, dadurch gekennzeichnet, daß mindestens einige Führungsrollen (61, 62, 63, 64) eine Führungsnut (65) aufweisen, welche durch die zwei unter einem Winkel zueinander angeordneten Führungsflächen (66, 67) und die weitere Führungsfläche (68) gebildet ist, wobei eine der seitlichen Führungsflächen (68) zum Einstellen der Breite der Führungsnut (65) verstellbar ist.

11. Vorrichtung nach einem der Ansprüche 8 bis 10, dadurch gekennzeichnet, daß den Führungen (52, 57, 58) Stellantriebe (54) zugeordnet sind, welche über Impulsleitungen (55) mit einem Steuergerät (56) verbunden sind.

12. Vorrichtung nach einem der Ansprüche 8 bis 11, dadurch gekennzeichnet, daß den Führungen (4, 5, 8, 9, 10, 11; 52, 57, 58; 61, 62, 63, 64) von einer Steuereinheit über Proportionalventile zentral anfahrbare Hydraulikantriebe zugeordnet sind.

13. Vorrichtung nach einem der Ansprüche 8 bis 12, dadurch gekennzeichnet, daß die Fertigungsstraße (1) einlaufseitig einen austauschbaren Torpedo (16) zum Positionieren der Einzelprofile (2, 3) aufweist.

## Claims

1. Method for producing composite sections from at least two individual sections with at least one connecting insulating web, in particular for doors and windows, with:
- at least two individual sections (2, 3; 69, 70) being guided in parallel at a spacing from one another by means of guides (4, 5, 8, 9, 10, 11; 52, 57, 58; 61, 62, 63, 64);
- at least one seal (18, 24) being inserted between the individual sections (2, 3; 69, 70), and a plastic material (21) in a liquid form, which hardens to form the insulating web, being deposited on the seal;
characterised in that
- each individual section (2, 3; 69, 70) is separately guided by guides, in the form of guide rollers (8, 9, 10, 11; 52; 61, 62, 63, 64), which can be adjusted transversely and vertically to the guide direction;
- each of these guide rollers comprises at least two guide surfaces (28, 29; 66, 67), which form an angle with one another;
- each of these guide rollers guides the individual section (2, 3; 69, 70) associated with them with one of their guide surfaces (29, 66) from the top or the bottom and with the other guide surface (28; 67) from one side;
- each individual section (2, 3; 69, 70) is supported on the other side by an additional guide, which can be adjusted at least transversely to the guide direction, in the form of another guide surface (4, 5; 57, 58; 68).

2. Method according to claim 1, characterised in that a support guide (4, 5) is used as the additional guide surface.

3. Method according to claim 1, characterised in that each individual section (69, 70) is guided by guide rollers (61, 62, 63, 64), at least some of which comprise a guide groove (65) which is defined by three guide surfaces (66, 67, 68), the width of the guide groove (65) being adaptable to the individual section (69, 70) which is to be guided by adjusting one of the lateral guide surfaces (68).

4. Method according to claim 1, 2 or 3, characterised in that the guides (57, 58) and/or the guide rollers (52) are automatically adjusted via a control device (56) and actuators (54) on the basis of a predetermined program.

5. Method according to one of claims 1 to 4, characterised in that filling sections are introduced into the channel (22) formed by the individual sections (2, 3) and the seal (18), which filling sections are embedded in the liquid plastic material.

6. Method according to one of claims 1 to 5, characterised in that a granular plastic material is introduced into the channel (22) formed by the individual sections (2, 3) and the seal (18), which material is embedded in the liquid plastic material.

7. Method according to one of claims 1 to 6, characterised in that the individual sections (2, 3) are guided at a spacing via an interchangeable torpedo-shaped core (16) during the feed process.

8. Device for producing composite sections from at least two individual sections with at least one connecting insulating web, in particular for doors and windows, consisting of:
- a production line (1) formed by guides (4, 5, 8, 9, 10, 11; 52, 57, 58; 61, 62, 63, 64) for two individual sections (2, 3; 69, 70) which are to be guided in parallel at a spacing from one another;
- an insertion device (17, 23) for introducing a seal (18, 24) between the individual sections (2, 3; 69, 70); as well as
- a delivery device (20), which opens into the channel (22) defined by the individual sections (2, 3; 69, 70) and the seal (18, 24), for a plastic material (21) in a liquid state which hardens to form the insulating web;
characterised in that
- these guides can be adjusted transversely and vertically to the guide direction and, for each individual section (2, 3; 69, 70), comprise transversely and vertically adjustable guide rollers (8, 9, 10, 11; 52; 61, 62, 63, 64) which are arranged separately below and above these sections;
- each of these guide rollers comprises at least two guide surfaces (28, 29; 69, 70) which are arranged at an angle to one another;
- one of these guide surfaces (29; 66) bears against the associated individual section (2, 3; 69, 70) from the bottom or the top and the other guide surface (28; 67) bears against the associated individual section (2, 3; 69, 70) from one side; and that
- an additional guide, which can be adjusted at least transversely to the guide direction, in the form of another guide surface (4, 5; 57, 58; 68) bears against the other side of the respective individual section.

9. Device according to claim 8, characterised in that the additional guide surface consists of a support guide (4, 5).

10. Device according to claim 8, characterised in that at least some guide rollers (61, 62, 63, 64) comprise a guide groove (65) which is formed by the two guide surfaces (66, 67) arranged at an angle to one another and the additional guide surface (68), one of the lateral guide surfaces (68) being adjustable to set the width of the guide groove (65).

11. Device according to one of claims 8 to 10, characterised in that actuators (54) are associated with the guides (52, 57, 58), which actuators are connected to a control device (56) via pulse transmission lines (55).

12. Device according to one of claims 8 to 11, characterised in that hydraulic drives, which can be centrally started by a control unit via proportional valves, are associated with the guides (4, 5, 8, 9, 10, 11; 52, 57, 58; 61, 62, 63, 64).

13. Device according to one of claims 8 to 12, characterised in that the production line (1) comprises at the feed side an interchangeable torpedo-shaped cone (16) for positioning the individual sections (2, 3).

## Revendications

1. Procédé pour la production de profilés composites à partir d'au moins deux profilés individuels avec au moins une âme isolante de liaison, en particulier pour des portes et fenêtres, dans lequel :
- au moins deux profilés individuels (2, 3 ; 69, 70) sont guidés à distance parallèlement les uns par rapport aux autres au moyen de guidages (4, 5, 8, 9, 10, 11 ; 52, 57, 58 ; 61, 62, 63, 64) ;
- entre les profilés individuels (2, 3 ; 69, 70), on introduit au moins un joint d'étanchéité (18, 24), et par dessus on dépose une matière plastique (21) sous forme liquide qui durcit pour former l'âme isolante ;
caractérisé en ce que
- chacun des profilés individuels (2, 3 ; 69, 70) est guidé séparément par des guidages en forme de galets de guidage (8, 9, 10, 11 ; 52 ; 61, 62, 63, 64) réglables transversalement et perpendiculairement par rapport à la direction de guidage ;
- chacun de ces galets de guidage présente au moins deux surfaces de guidage (28, 29 ; 66, 67) formant un angle l'une par rapport à l'autre ;
- chacun de ces galets de guidage guide le profilé individuel (2, 3 ; 69, 70) qui lui est associé par une de ses surfaces de guidage (29, 66) depuis le haut ou depuis le bas, et par l'autre surface de guidage (28 ; 67) depuis l'un des côtés ;
- chaque profilé individuel (2, 3 ; 69, 70) est soutenu sur l'autre côté par un guidage supplémentaire en forme d'une surface de guidage supplémentaire (4, 5 ; 57, 58 ; 68) réglable du moins transversalement par rapport à la direction de guidage.

2. Procédé selon la revendication 1, caractérisé en ce que l'on utilise en tant que surface de guidage supplémentaire un guidage d'appui (4, 5).

3. Procédé selon la revendication 1, caractérisé en ce que chaque profilé individuel (69, 70) est guidé par des galets de guidage (61, 62, 63, 64) dont au moins quelques-uns présentent une gorge de guidage (65) qui est délimitée par trois surfaces de guidage (66, 67, 68), et en ce que la largeur de la gorge de guidage (65) est susceptible d'être adaptée au profilé individuel (69, 70) à guider par réglage de l'une des surfaces de guidage latérales (68).

4. Procédé selon l'une quelconque des revendications 1, 2 et 3, caractérisé en ce que les guidages (57, 58) et/ou les galets de guidage (52) peuvent être réglés automatiquement via un appareil de commande (56) et des servomoteurs (54) au moyen d'un programme préétabli.

5. Procédé selon l'une quelconque des revendications 1 à 4, caractérisé en ce que dans le canal (22) formé par les profilés individuels (2, 3) et le joint d'étanchéité (18), on introduit des profilés de remplissage et on les noie dans la matière plastique liquide.

6. Procédé selon l'une quelconque des revendications 1 à 5, caractérisé en ce que dans le canal (22) formé par les profilés individuels (2, 3) et le joint d'étanchéité (18), on introduit de la matière plastique en granulés et on la noie dans la matière plastique liquide.

7. Procédé selon l'une quelconque des revendications 1 à 6, caractérisé en ce que les profilés individuels (2, 3) sont guidés à distance l'un de l'autre, lors de l'introduction, à l'aide d'une torpille remplaçable (16).

8. Dispositif pour la production de profilés composites à partir d'au moins deux profilés individuels avec au moins une âme isolante de liaison, en particulier pour des portes et fenêtres, constitué par :
- une chaîne de production (1) formée par des guidages (4, 5, 8, 9, 10, 11 ; 52, 57, 58 ; 61, 62, 63, 64) pour deux profilés individuels (2, 3 ; 69, 70) à guider à distance parallèlement l'un à l'autre ;
- un dispositif d'entrée (17, 23) pour l'introduction d'un joint d'étanchéité (18, 24) entre les profilés individuels (2, 3 ; 69, 70) ; et
- un dispositif de distribution (20) pour une matière plastique (21) à l'état liquide qui durcit pour former l'âme isolante, ce dispositif de distribution débouchant dans un canal (22) délimité par les profilés individuels (2, 3 ; 69, 70) et par le joint d'étanchéité (18, 24) ;
caractérisé en ce que
- ces guidages sont réglables transversalement et perpendiculairement à la direction de guidage, et présentent pour chaque profilé individuel (2, 3 ; 69, 70) des galets de guidage (8, 9, 10, 11; 52 ; 61, 62, 63, 64) agencés séparément au-dessous et au-dessus de celui-ci et réglables transversalement et verticalement ;
- chacun de ces galets de guidage présente au moins deux surfaces de guidage (28, 29 ; 69, 70) agencées sous un angle l'une par rapport à l'autre ;
- l'une de ces surfaces de guidage (29 ; 66) s'appuie depuis le bas ou depuis le haut, et l'autre surface de guidage (28 ; 67) depuis l'un des côtés contre le profilé individuel associé (2, 3 ; 69, 70) ; et en ce que
- un guidage en forme d'une surface de guidage supplémentaire (4, 5 ; 57, 58 ; 68) réglable du moins transversalement par rapport à la direction de guidage s'appuie contre l'autre côté du profilé individuel respectif.

9. Dispositif selon la revendication 8, caractérisé en ce que la surface de guidage supplémentaire est constituée par un guidage d'appui (4, 5).

10. Dispositif selon la revendication 8, caractérisé en ce qu'au moins quelques-uns des galets de guidage (61, 62, 63, 64) présentent une gorge de guidage (65) qui est formée par les deux surfaces de guidage (66, 67) agencées sous un angle l'une par rapport à l'autre et par la surface de guidage supplémentaire (68), l'une des surfaces de guidage latérales (68) étant réglable pour le réglage de la largeur de la gorge de guidage (65).

11. Dispositif selon l'une quelconque des revendications 8 à 10, caractérisé en ce que l'on associe aux guidages (52, 57, 58) des servomoteurs (54) qui sont reliés via des lignes à impulsions (55) à un appareil de commande (56).

12. Dispositif selon l'une quelconque des revendications 8 à 11, caractérisé en ce que l'on associe aux guidages (4, 5, 8, 9, 10, 11 ; 52, 57, 58 ; 61, 62, 63, 64) des entraînements hydrauliques susceptibles d'être commandés de façon centrale depuis une unité de commande via des soupapes proportionnelles.

13. Dispositif selon l'une quelconque des revendications 8 à 12, caractérisé en ce que la chaîne de production (1) présente du côté entrée une torpille remplaçable (16) pour le positionnement des profilés individuels (2, 3).
